# EUROPÄISCHE PATENTSCHRIFT

(11) **EP 2 493 811 B1**
(45) Veröffentlichungstag und Bekanntmachung des Hinweises auf die Patenterteilung: **17.01.2018**
(21) Anmeldenummer: 10773291.9
(22) Anmeldetag: 25.10.2010
(51) Int. Cl.: C01B 32/00, C01B 32/05, B01J 19/12, B82Y 30/00, B82Y 40/00

(54) **Verfahren zur Seitenwandfunktionalisierung von Kohlenstoff-Nanoröhren**
Method for sidewall functionalization of carbon nanotubes
Méthode de funcionnalisation des parois latérales de nanotubes de carbone

(30) Priorität: 28.10.2009 DE 102009051084
(43) Veröffentlichungstag der Anmeldung: 05.09.2012
(73) Patentinhaber: Future Carbon GmbH, 95448 Bayreuth (DE)
(72) Erfinder: HELBIG, Jens, 90403 Nürnberg (DE); ZENKEL, Christian, 95494 Gesees (DE)
(74) Vertreter: Müller, Christian Stefan Gerd
(86) Internationale Anmeldenummer: PCT/EP2010/066062
(87) Internationale Veröffentlichungsnummer: WO 2011/051223

(56) Entgegenhaltungen:
- JP-A- 2000 109 310
- JP-A- 2007 055 863
- JP-A- 2009 076 514
- US-A1- 2006 210 466
- JUNXIN LI DR., HELENA GRENNBERG PROF. DR: "MICROWAVE-ASSISTED COVALENT SIDEWALL FUNCTIONALIZATION OF MULTIWALLED CARBON NANOTUBES", CHEMISTRY - A EUROPEAN JOURNAL, Bd. 12, Nr. 14, 27. Februar 2006 (2006-02-27), Seiten 3869-3875, XP002618549, DOI: 10.1002/chem.200501314
- KYOUNG-SIK MOON ET AL: "Surface Treatment of MWCNT Array and Its Polymer Composites for TIM Application", 2008 Electronic Components and Technology Conference , 2008, XP002618550, Gefunden im Internet: URL:http://ieeexplore.ieee.org/stamp/stamp .jsp?arnumber=04549975 [gefunden am 2011-01-26]

## Beschreibung

Die vorliegende Erfindung betrifft ein Verfahren zur Seitenwandfunktionalisierung von Kohlenstoff-Nanoröhren, insbesondere von mehrwandigen Kohlenstoff-Nanoröhren, mittels einer Diels-Alder-Reaktion. Weiterhin betrifft die Erfindung eine funktionalisierte Kohlenstoff-Nanoröhre, insbesondere funktionalisierte mehrwandige Kohlenstoff-Nanoröhre. Insbesondere betrifft die vorliegende Erfindung eine kovalente Seitenwandfunktionalisierung von einwandigen oder mehrwandigen Kohlenstoff-Nanoröhren (Carbon-Nanotubes - CNT).

Für eine bessere Benetzung von CNT und einer möglichen kovalenten Vernetzung von CNT-Oberflächen mit einer sie umgebenden reaktiven Matrix zur Steigerung von mechanischen Eigenschaften ist es notwendig, die Oberflächen von CNT chemisch zu modifizieren.

Dadurch werden für eine Vielzahl von Anwendungen verbesserte Materialien auf Basis von vernetzenden und thermoplastischen Kunststoffen möglich, wie beispielsweise Faserverbundbauteile mit verbesserter interlaminarer Scherfestigkeit, Elastomere mit erhöhtem E-Modul, stark vernetzte Harze mit gesteigerter Zähigkeit, mechanisch verstärkte Polyamide und dergleichen.

Des Weiteren lassen sich mit an der Oberfläche modifizierten CNT auch verbesserte Dispersionen auf wässriger oder organischer Lösemittelbasis herstellen, die dann als Vorstufen für Beschichtungen, als Additive in Polymeren, Metallen oder Keramiken eingesetzt werden können.

Die Modifizierung von CNT-Oberflächen kann prinzipiell auf verschiedene Arten stattfinden, wie:
- Einsatz von so genannten Surfactants, hauptsächlich Tenside, die über Van der Waals Wechselwirkungen an die Oberfläche der CNT gebunden sind;
- durch über eine π-π- Wechselwirkung an die Oberfläche koordinierte polyaromatische Verbindungen;
- durch Aufwachsen von Polymeren an der Oberfläche der CNT über "grafting from" Methoden;
- durch Abscheiden von metallischen oder metalloxidischen Partikeln oder Filmen an der CNT-Oberfläche;
- durch Oxidation der CNT-Oberfläche mit oxidierenden Säuren und weitere Funktionalisierung der entstehenden Carboxylgruppen;
- durch mikrowellenunterstützte Cycloadditionen mit enophilen und dienophilen Reaktanden, wobei die CNT selbst als Dienophile bzw. Enophile reagieren;
- durch Aufbringen von Molekülen niedrigen Molekulargewichts mit einer spezifischen Endgruppe über Reaktionen, die zu einer kovalenten Anbindung an die CNT-Oberfläche führen.

Vor allem die beiden letztgenannten Methoden sind für die Anwendung von CNTs als Verstärkungsmaterial in Polymeren von besonderem Interesse, da hier die stärkste Verbindung zwischen polymerer Matrix und dem CNT-Füllstoffpartikel gewährleistet werden kann. Nur durch eine solche starke Anbindung ist es möglich, die aus der Verbundmateriallehre bekannten Verstärkungsmechanismen, beispielsweise Kraftübertrag auf die eingebetteten Partikel, zu erreichen. Des Weiteren wird die besondere Struktur der CNT nicht übermäßig stark angegriffen, wie es bei einer Oxidation der Oberfläche der Fall ist, wodurch sowohl die mechanischen, als auch die elektronischen Eigenschaften weitgehend erhalten bleiben.

Die vorletzte der genannten Methoden (mikrowellenunterstützte Cycloaddition) ist vor allem für eine schonende Seitenwandfunktionalisierung der CNT ohne Schädigung des σ-Systems mit dem Ziel einer Carboxylgruppe geeignet. Die so funktionalisierten CNT können problemlos über bekannte Methoden weiter derivatisiert und funktionalisiert werden und sind so für eine Vielzahl von Anwendungen, zum Beispiel in Harzen, geeignet. So können beispielsweise kovalente Vernetzungen von CNT mit Polymermatrizes und somit eine Verbesserung der mechanischen und elektronischen Eigenschaften von Harzen und anderen Polymeren erreicht werden.

Ein weiterer Vorteil dieser Methode liegt darin, dass durch die Wahl eines geeigneten Reaktanden das π-System und somit die elektronischen Eigenschaften weitgehend ungestört erhalten bleiben, was diese so funktionalisierten CNT für elektronische Anwendungen wieder interessant macht.

Die Modifikation von CNT mit kovalent angebundenen Molekülen wird schon seit einigen Jahren auf verschiedenen Wegen untersucht und wird für bestimmte Funktionalitäten auch bereits kommerziell eingesetzt.

Dabei muss zuerst zwischen der Funktionalisierung von einwandigen Kohlenstoff-Nanoröhren (Singlewall-Nanotubes (SWCNT)) und mehrwandigen Kohlenstoff-Nanoröhren (Multiwall-Nanotubes (MWCNT)) unterschieden werden. Denn es ergeben sich fundamentale Unterschiede in der Art der Reaktionsmechanismen, die derzeit an SWCNT beziehungsweise MWCNT eingesetzt werden können.

Eine direkte Seitenwandfunktionalisierung ist derzeit nur an SWCNT zweifelsfrei nachgewiesen. Dies wird mit einer stärkeren Reaktivität der SWCNT aufgrund stärkerer Krümmung der Oberfläche erklärt und somit auch stärkeren Pyramidalisierung des π-Systems.

Eine Oxidierung mit den bisherigen Methoden, wie beispielsweise mit HNO₃, ist nur an MWCNT ohne eine gravierende Störung der Eigenschaften von CNT möglich. Eine Oxidierung von SWCNT durch oxidierende Säuren oder Gase, ohne die SWCNT stark zu schädigen oder vollständig zu zerstören, ist derzeit nicht möglich. Nicht-kovalente Funktionalisierungen konnten bisher nur für SWCNT zweifelsfrei nachgewiesen werden.

Derzeit sind in der Literatur die meisten Arbeiten zur kovalenten Funktionalisierung von CNT an SWCNT beschrieben. Die Gründe hierzu sind nicht allgemein bekannt, doch wird angenommen, dass die starke Krümmung der Oberfläche und die daraus resultierende starke Pyramidalisierung des π-Systems der SWCNT diese besonders reaktiv macht und so eine chemische Reaktion der π-Bindungen der aromatischen Ringe erst ermöglicht.

Die US 2006/0210466 beschreibt ein Verfahren zur Funktionalisierung von Nanomaterialien, insbesondere Kohlenstoff-Nanoröhren, wobei in einem ersten Schritt einwandige Kohlenstoff-Nanoröhren (SWNTs) mikrowellenunterstützt mit konzentrierter Salpetersäure behandelt werden, wodurch die Oberfläche der SWNTs carboxyliert wird.

Die an SWCNT beschriebenen Reaktionen sind für MWCNT für eine direkte Seitenwandfunktionalisierung bisher nicht zweifelsfrei nachgewiesen.

Die derzeit veröffentlichten Publikationen belegen eine Funktionalisierung bisher nur für eine Reaktion, in welcher das CNT als Dienophil reagiert. Diese wurde bisher auch nur für SWCNT und nicht für MWCNT analytisch nachgewiesen.

In neueren Studien wurde gezeigt, dass der Krümmungsradius einen Einfluss auf die Reaktion hat und die Reaktivität und somit die Möglichkeit einer kovalenten Seitenwandfunktionalisierung von SWCNT und MWCNT aufgrund dessen stark unterschiedlich ist. Der Krümmungsradius bei SWCNT ist deutlich höher als bei MWCNT. Daher sind die bisher beschriebenen Reaktionen, welche an SWCNT nachgewiesen wurden, unter den gegebenen, unangepassten Bedingungen nicht ohne weitere Forschung für MWCNT aufgrund deren deutlich niedrigeren Reaktivität, welcher eben auf den kleineren Krümmungsradius der äußeren Röhrenwand zurückzuführen ist, anwendbar.

Mikrowellenreaktionen selbst sind in der Industrie bisher noch nicht für CNT angewendet worden und in der Literatur bisher auch nur für Reaktionen bekannt, bei denen die CNT selbst als Dienophile reagieren.

Deswegen wird für MWCNT bisher üblicherweise ein mehrstufiger Weg zur Funktionalisierung vorgenommen. Zuerst wird die Oberfläche der MWCNT oxidiert, meistens mittels konzentrierter Salpetersäure. Bei diesem Vorgang wird allerdings das π- und σ-Bindungssystem der Graphenschichten angegriffen und dadurch empfindlich gestört, was eine deutliche Verschlechterung der mechanischen Eigenschaften und der chemischen Stabilität der MWCNT sowie eine Schädigung selbiger zur Folge hat. Diese Schädigung wirkt sich auch auf weiter innen gelegene Schichten aus, da diese Art der Oxidierung nach Zerstörung der ersten Seitenwand auch auf die darunter liegende Wand übergreift und auch diese schädigt. So ist dadurch an stark fehlerbehafteten Bereichen der CNT eine unkontrollierte Zerstörung der CNT bis hin zum Brechen der Röhre an dieser Stelle möglich.

An diesen oxidierten Stellen, die im Wesentlichen aus Carboxylgruppen bestehen, werden dann über einen weiteren mehrstufigen Prozess über Substitution der Carboxylgruppen mit einer Halogenverbindung, beispielsweise Thionylchlorid, reaktive Zentren geschaffen, an welchen weiterführende funktionelle Endgruppen angebracht werden können.

Die Art von direkter Seitenwandfunktionalisierung, welche bei SWCNT möglich ist, ist für MWCNT aufgrund der geringeren Reaktivität der MWCNT-Oberfläche nicht mit gleicher Effektivität möglich. Außerdem sind die für MWCNT verwendeten Routen oft mit sehr ätzenden Reagenzien, zum Beispiel Thionylchlorid, und nur mit großem apparativem Aufwand, beispielsweise Schutzgas und entsprechend der Toxizität der Reagenzien notwendigen zusätzlichen Arbeitsschutzmaßnahmen, durchführbar.

Reaktionsrouten, die direkt die Seitenwand funktionalisieren können, ohne die Seitenwand vollständig zu zerstören, und die ohne hochgiftige Reagenzien und aufwendige Apparaturen auskommen, sind derzeit ausschließlich für SWCNT in Untersuchung.

Ausgehend vom genannten Stand der Technik liegt der vorliegenden Erfindung die Aufgabe zugrunde, ein Verfahren zum Herstellen von seitenwandfunktionalisierten Kohlenstoff-Nanoröhren, insbesondere von mehrwandigen Kohlenstoff-Nanoröhren, sowie eine funktionalisierte Kohlenstoff-Nanoröhre, insbesondere eine funktionalisierte mehrwandige Kohlenstoff-Nanoröhre, bereitzustellen, bei dem/der die vorgenannten Nachteile vermieden werden können.

Diese Aufgabe wird erfindungsgemäß gelöst durch das Verfahren mit den Merkmalen gemäß dem unabhängigen Patentanspruch 1 sowie der funktionalisierten Kohlenstoff-Nanoröhre mit den Merkmalen gemäß dem unabhängigen Patentanspruch 7. Weitere Merkmale und Details der Erfindung ergeben sich aus den Unteransprüchen, der Beschreibung sowie den Zeichnungen. Dabei gelten Merkmale und Details, die im Zusammenhang mit dem Verfahren beschrieben sind, selbstverständlich auch im Zusammenhang mit der funktionalisierten Kohlenstoff-Nanoröhre, und umgekehrt, so dass bezüglich der Offenbarung eines Erfindungsaspekts stets vollinhaltlich auf die Offenbarung des jeweils anderen Erfindungsaspekts Bezug genommen und verwiesen wird.

Mittels der vorliegenden Erfindung kann eine mikrowellengestützte, insbesondere kovalente, Seitenwandfunktionalisierung von mehrwandigen Kohlenstoff-Nanoröhren (MWCNT), beispielsweise mit Maleinsäureanhydrid, und durch eine Diels-Alder-Reaktion, zur Erzeugung funktioneller Säuregruppen durchgeführt werden. Insbesondere betrifft die vorliegende Erfindung eine kovalente Seitenwandfunktionalisierung von einwandigen oder mehrwandigen Kohlenstoff-Nanoröhren (Carbon-Nanotubes - CNT).

Gemäß der vorliegenden Erfindung werden mikrowellengestützte Verfahren zur Erzeugung von, insbesondere kovalent, an die Seitenwand insbesondere eines MWCNT angebrachten Molekülen beschrieben, die mit ausgewählten funktionellen Endgruppen versehen werden können, ohne die Seitenwand zu zerstören.

Bei einer "funktionellen Gruppe" handelt es sich insbesondere um eine Gruppe, die die Stoffeigenschaften und/oder das Reaktionsverhalten der sie tragenden Verbindungen bestimmt.

Diese Verfahren machen sich insbesondere die reaktionsbeschleunigenden Eigenschaften von Mikrowellenstrahlung zunutze, welche es insbesondere ermöglichen, die aus der klassischen Reaktion für Diels-Alder-Reaktionen bekannten langen Reaktionszeiten von 24-48 Stunden auf wenige Minuten zu verkürzen.

Ebenso stellt diese Methode eine Reaktion von MWCNT mit einem dienophilen Reaktanden dar.

Gemäß dem ersten Aspekt der Erfindung wird ein Verfahren zur Seitenwandfunktionalisierung von Kohlenstoff-Nanoröhren, insbesondere von mehrwandigen Kohlenstoff-Nanoröhren, bereitgestellt, das dadurch gekennzeichnet ist, dass die Seitenwand der Kohlenstoff-Nanoröhren mikrowellenunterstützt mittels einer Diels-Alder-Reaktion funktionalisiert wird.

Kohlenstoff-Nanomaterialien und Kohlenstoff-Mikromaterialien sind insbesondere mikroskopisch kleine Gebilde auf Kohlenstoffbasis, beispielsweise aus Kohlenstoff. Die Größe von Kohlenstoff-Nanomaterialien liegt dabei insbesondere im Nanometerbereich, während die Größe von Kohlenstoff-Mikromaterialien insbesondere im Mikrometerbereich liegt.

Vorzugsweise können die Kohlenstoff-Nanoröhren zur Funktionalisierung unter Mikrowelleneinstrahlung gebracht werden.

Vorzugsweise können die Kohlenstoff-Nanoröhren in einer Reaktionsmischung vorgesehen sein, wobei die Reaktionsmischung zur Funktionalisierung zumindest zeitweilig unter Mikrowelleneinstrahlung gebracht wird. Vorteilhaft kann die Reaktionsmischung aus zwei oder mehr Komponenten bestehen, wobei eine der Komponenten eine Kohlenstoff-Nanoröhre ist.

Eine kovalente mikrowellenunterstützte Seitenwandfunktionalisierung von MWCNT mit Enophilen wie Maleinsäureanhydrid, Maleinsäureimid und deren Derivaten zur Erzeugung von funktionellen, endständigen primären Amino-, Hydroxy- und Säuregruppen sowie von funktionellen Gruppen, welche das konjugierte π-System nahezu intakt lassen, an der Oberfläche der CNT-Seitenwand kann vorteilhaft auf dem nachfolgend näher beschriebenen Weg erreicht werden.

Die Funktionalisierung kann vorteilhaft durch einen in der Theorie bekannten, die Reaktionszeit von Reaktionen in der organischen Molekülchemie vor allem für Cycloadditionen verkürzenden Effekt von Mikrowelleneinstrahlung auf die Reaktionsmischung erreicht werden.

Für die Mikrowellenfunktionalisierung werden vorzugsweise, insbesondere gereinigte, MWCNT oder SWCNT trocken oder als Dispersion mit Maleinsäureanhydrid oder einem seiner Derivate, wie beispielsweise in Tabelle 1 weiter unten genannt, vorgelegt. Bei einer solchen Dispersion handelt es sich insbesondere um eine oben beschriebene Reaktionsmischung.

Als Lösungsmittel der Dispersionen können beispielsweise Wasser oder verschiedene höher und hochsiedende organische Lösemittel, wie beispielsweise 1,5-Pentandiol, 1,4-Butandiol, Ethanol, Butanol, Toluol, DMF, THF und andere, verwendet werden.

Die Konzentration der CNT im Lösungsmittel kann vorteilhaft zwischen 0,001 und 10 Gewichtprozent betragen, wobei die Erfindung nicht auf diese Werte beschränkt ist. Wichtig ist nur eine ausreichend gute Vereinzelung der CNT in der Dispersion bei gleichzeitig niedriger Viskosität der Dispersion, zum Beispiel 10 mPa·s bis 1 Pa·s, um ein Rühren der Dispersion zu erleichtern.

Die Dispersion wird vorzugsweise mit gängigen Dispersions- und Mischmethoden mit dem Maleinsäureanhydrid beziehungsweise seinen Derivaten vermischt, um eine möglichst homogene Mischung zu erhalten. Das Verhältnis von Maleinsäurederivat zu CNT kann dabei allerdings beliebig gewählt werden, wobei ein Überschuss des Maleinsäurederivats reaktionsförderlich ist.

Im Anschluss kann die Reaktionsmischung vorzugsweise mit Schutzgas, beispielsweise mit CO₂, N₂, Ar, He, Ne oder dergleichen, gespült werden.

Vorzugsweise werden die Kohlenstoff-Nanoröhren oder wird die Reaktionsmischung unter Mikrowelleneinstrahlung unter kräftigem Rühren und/oder durch eine nichtstatische Aufhängung des Reaktionsgefäßes in der Mikrowelle rotiert.

Anschließend wird das Reaktionsgemisch vorzugsweise unter Mikrowelleneinstrahlung, vorzugsweise innerhalb von 1 bis 20 Minuten, vorzugsweise in einem Temperaturbereich von 50 - 300 °C zur Reaktion gebracht und vorzugsweise für 2 bis 120 Minuten auf dieser Temperatur gehalten, wobei die Methode vorteilhaft mit Hilfe von Temperatursensoren in und außerhalb des Reaktionsgefäßes ständig kontrolliert wird. Vorzugsweise werden die Kohlenstoff-Nanoröhren oder wird die Reaktionsmischung für eine definierte Zeitdauer, vorzugsweise für 1 bis 20 Minuten, unter Mikrowelleneinstrahlung zur Reaktion gebracht. In weiterer Ausgestaltung können die Kohlenstoff-Nanoröhren oder kann die Reaktionsmischung in einem definierten Temperaturbereich, vorzugsweise in einem Temperaturbereich von 50 bis 300°C, zur Reaktion gebracht werden.

Dabei wird die Reaktionsmischung vorzugsweise beständig gerührt und/oder in einem rotierenden Reaktionsgefäß bewegt und vorteilhaft mit Schutzgas gespült.

Das beschriebene Mikrowellenverfahren wird bevorzugt mit oben genannten Schutzgasen durchgeführt, um Plasmabildung und ein übermäßiges Abreagieren des Maleinsäureanhydrids beziehungsweise seiner Derivate mit dem Luftsauerstoff zu unterbinden. Das Verfahren kann aber auch ohne vorherige Entfernung des Sauerstoffs erfolgreich durchgeführt werden.

Anschließend wird die Reaktionsmischung vorteilhaft auf eine Temperatur zwischen 10 °C und 30 °C abgekühlt. Das Reaktionsprodukt wird vorzugsweise mit viel reinem Lösemittel, wie beispielsweise H₂O, Methanol, Ethanol, Butanol, Toluol, DMF, THF und dergleichen, gewaschen und kann anschließend getrocknet werden.

Im Anschluss an den Reinigungsschritt kann das Produkt vorteilhaft nochmals in H₂O, beispielsweise für 0,5 bis 10 Stunden, gekocht werden, um das Maleinsäureanhydrid zu öffnen und die Dicarbonsäure zu erhalten, wodurch dieses Verfahren auch eine für das σ-System und damit die Struktur von CNT schonende Alternative für die Herstellung von Carbonsäure-funktionalisierten CNT darstellt.

Erfindungsgemäß werden die Kohlenstoff-Nanoröhren mittels einer Diels-Alder-Reaktion funktionalisiert. Die Diels-Alder-Reaktion ist eine chemische Reaktion, bei der Bindungen zwischen Kohlenstoff-Atomen aufgebaut werden.

Nachfolgend wird ein Ausführungsbeispiel für die Mikrowellenfunktionalisierung beschrieben.

Für eine Cycloaddition in der Mikrowelle werden, insbesondere gereinigte, MWCNT trocken mit trockenem, feingesiebtem Maleinsäureanhydrid in einem Reaktionskolben vermengt. Anschließend wird die Pulvermischung, bei der es sich um eine Reaktionsmischung handeln kann, in der Mikrowelle mit einem Rührer versehen und mit He gespült.

Anschließend wird die Mischung unter ständigem Rühren innerhalb von 20 min auf 200 °C erhitzt und ungefähr 10 min bei dieser Temperatur gehalten.

Nach Abkühlen der Reaktionsmischung auf Raumtemperatur wird das Pulver mit viel Ethanol gewaschen und anschließend getrocknet.

Um die Dicarbonsäurefunktionalitäten zu erhalten, muss das gereinigte Produkt anschließend bis zu 2 h in H₂O gekocht und anschließend getrocknet werden.

Die beschriebene Methode zur Mikrowellenfunktionalisierung von mehr- und einwandigen Kohlenstoff-Nanoröhren (MWCNT bzw. SWCNT) stellt eine funktionierende kovalente Seitenwandfunktionalisierung mittels Mikrowelleneinstrahlung dar, bei welcher CNT als Enophile auftreten und mit einem Dienophil reagieren.

Die Tabelle 1 zeigt verschiedene zur Reaktion verwendbare Anhydride, welche als Reaktionspartner in Frage kommen.

**Tabelle 1**

| | |
|---|---|
| Maleinsäureimid | Maleinsäureanhydrid |
| Maleinsäure | N-(4-Hydroxyphenyl)-maleinsäureimid |
| Maleinsäuredichlorid | Maleinsäurediamid |
| Propensäure | Propensäureamid |
| Propensäurechlorid | 2-Butendisäure |
| 2-Butendisäurechlorid | 2-Butendisäureamid |

Die Reaktionen wurden in Ansätzen von 50 Milligramm bis hin zu 10 Gramm erfolgreich durchgeführt und die Reaktionszeiten betrugen 2 bis 120 Minuten. Das entstehende Produkt bietet im Gegensatz zur bisherigen Methode der Carboxylierung mit HNO₃ den Vorteil einer COOH-Funktionalisierung von Kohlenstoff-Nanoröhren mit minimaler Schädigung der CNT-Struktur, wodurch die mechanischen Eigenschaften der funktionalisierten MWCNT weitgehend erhalten bleiben. Die Reaktion ermöglicht auch die Addition von Maleinsäureimid und anderen Maleinsäurederivaten und somit eine Erzeugung von zum Beispiel endständigen Amingruppen oder Initiatormolekülen für Polymerisationen an der Oberfläche der CNT-Seitenwände, wodurch sich ein weites Feld an weiteren Anwendungen, vor allem im Bereich der Komposite, eröffnet.

Der Reaktionsmechanismus selbst verläuft nach der in der Literatur bekannten Diels-Alder-Cycloaddition und wurde bisher in der Literatur von Delgado et al. nur für eine dienophile Reaktion seitens der MWCNT und nicht wie in diesem Fall für ein Enophil beschrieben.

Eine Diels-Alder-Cycloaddition öffnet im Gegensatz zur bisher gängigen Methode zur Erzeugung von Carboxylgruppen an den Seitenwänden von Kohlenstoff-Nanoröhren nur das π-System der CNT und ist nicht auf eine Öffnung und damit folgende Zerstörung des σ-Bindungsgerüstes angewiesen.

Zusätzlich erfordert diese Methode nicht das Vorhandensein von Fehlern in der Gerüststruktur der verwendeten Kohlenstoff-Nanoröhre, wie es bei der Oxidierung der CNT-Seitenwand mit oxidierenden Säuren wie HNO₃ der Fall ist.

Vorzugsweise weist das erfindungsgemäße Verfahren eines oder mehrere in den Ansprüchen, der Beschreibung, den Beispielen, den Tabellen sowie den Zeichnungen genannte Merkmale auf.

Gemäß einem zweiten Aspekt der Erfindung wird eine funktionalisierte Kohlenstoff-Nanoröhre, insbesondere eine funktionalisierte mehrwandige Kohlenstoff-Nanoröhre, bereitgestellt, die dadurch gekennzeichnet ist, dass diese mit einem erfindungsgemäßen Verfahren hergestellt wird, hergestellt worden ist oder herstellbar ist, wobei die Seitenwand der Kohlenstoff-Nanoröhre mikrowellenunterstützt mit einem Reaktionspartner, ausgewählt aus der Gruppe, bestehend aus Maleinsäureimid, Maleinsäure, Maleinsäuredichlorid, Propensäure, Propensäurechlorid, 2-Butendisäurechlorid, Maleinsäureanhydrid, N-(4-Hydroxyphenyl)-maleinsäureimid, Maleinsäurediamid, Propensäureamid, 2-Butendisäure, und 2-Butendisäureamid, funktionalisiert ist.

Vorteilhaft weist die funktionalisierte Kohlenstoff-Nanoröhre eines oder mehrere in den Ansprüchen, der Beschreibung, den Beispielen, den Tabellen sowie den Zeichnungen genannte Merkmale auf.

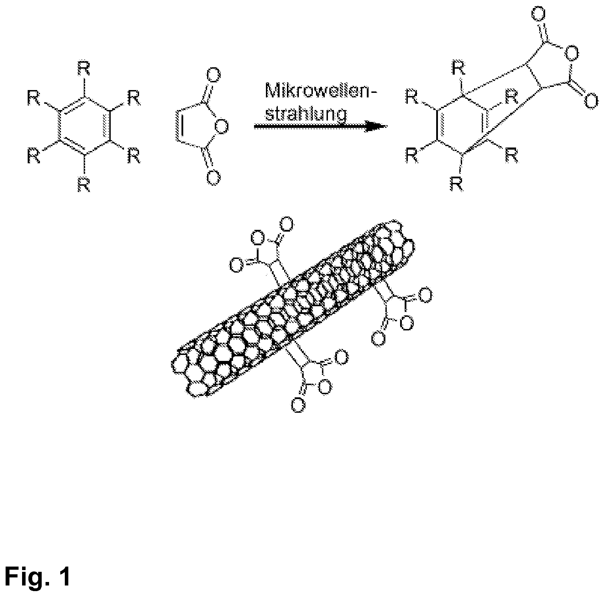

Die Erfindung wird auch anhand eines Ausführungsbeispiels unter Bezugnahme auf die beiliegende Zeichnung näher erläutert. Es zeigt
- Figur 1: den Reaktionsweg der mikrowellengestützten kovalenten Seitenwandfunktionalisierung

Das entstehende Produkt wird in Figur 1 schematisch dargestellt, um die Art der Bindung und die verschiedenen Möglichkeiten weiter zu verdeutlichen.

## Patentansprüche

1. Verfahren zur Seitenwandfunktionalisierung von Kohlenstoff-Nanoröhren, insbesondere von mehrwandigen Kohlenstoff-Nanoröhren, **dadurch gekennzeichnet, dass** die Seitenwand der Kohlenstoff-Nanoröhren mikrowellenunterstützt mittels einer Diels-Alder-Reaktion funktionalisiert wird.

2. Verfahren nach Anspruch 1, **dadurch gekennzeichnet, dass** die Kohlenstoff-Nanoröhren zur Funktionalisierung unter Mikrowelleneinstrahlung gebracht werden.

3. Verfahren nach Anspruch 1 oder 2, **dadurch gekennzeichnet, dass** die Kohlenstoff-Nanoröhren in einer Reaktionsmischung vorgesehen sind und dass die Reaktionsmischung zur Funktionalisierung zumindest zeitweilig unter Mikrowelleneinstrahlung gebracht wird.

4. Verfahren nach einem der Ansprüche 1 bis 3, **dadurch gekennzeichnet, dass** die Kohlenstoff-Nanoröhren oder die Reaktionsmischung für eine vorgegebene Zeitdauer, vorzugsweise für 1 bis 20 Minuten, unter Mikrowelleneinstrahlung zur Reaktion gebracht wird.

5. Verfahren nach einem der Ansprüche 1 bis 4, **dadurch gekennzeichnet, dass** die Kohlenstoff-Nanoröhren oder die Reaktionsmischung in einem definierten Temperaturbereich, insbesondere einem Temperaturbereich von 50 bis 300°C, zur Reaktion gebracht wird.

6. Verfahren nach einem der Ansprüche 1 bis 5, **dadurch gekennzeichnet, dass** das Verfahren mit Schutzgas durchgeführt wird.

7. Funktionalisierte Kohlenstoff-Nanoröhre, insbesondere funktionalisierte mehrwandige Kohlenstoff-Nanoröhre, **dadurch gekennzeichnet, dass** diese mit einem Verfahren gemäß einem der Ansprüche 1 bis 6 hergestellt wird, hergestellt worden ist oder herstellbar ist, wobei die Seitenwand der Kohlenstoff-Nanoröhre mit einem Reaktionspartner, ausgewählt aus der Gruppe, bestehend aus Maleinsäureimid, Maleinsäure, Maleinsäuredichlorid, Propensäure, Propensäurechlorid, 2-Butendisäurechlorid, Maleinsäureanhydrid, N-(4-Hydroxyphenyl)-maleinsäureimid, Maleinsäurediamid, Propensäureamid, 2-Butendisäure, und 2-Butendisäureamid, funktionalisiert ist.

## Claims

1. A method for sidewall functionalization of carbon nanotubes, in particular multi-wall carbon nanotubes, **characterized in that** the side wall of the carbon nanotubes is functionalized by means of a Diels-Alder reaction, assisted by microwaves.

2. The method of claim 1, **characterized in that** for the functionalization the carbon nanotubes are placed under microwave irradiation.

3. The method of claim 1 or 2, **characterized in that** the carbon nanotubes are provided in a reaction mixture and that for the functionalization the reaction mixture is placed, at least temporarily, under microwave irradiation.

4. The method of one of claims 1 to 3, **characterized in that** the carbon nanotubes or the reaction mixture is subject to reaction under microwave irradiation for a defined time period, preferably for 1 to 20 minutes.

5. The method of one of claims 1 to 4, **characterized in that** the carbon nanotubes or the reaction mixture is subject to reaction in a defined temperature range, in particular a temperature range from 50 to 300°C.

6. The method of one of claims 1 to 5, **characterized in that** the method is carried out with inert gas.

7. A functionalized carbon nanotube, in particular functionalized multi-wall carbon nanotube, **characterized in that** the carbon nanotube is produced, has been produced or can be produced with a method according to one of claims 1 to 6, wherein the side wall of the carbon nanotube is functionalized with a reaction partner selected from the group consisting of maleimide, maleic acid, maleic acid dichloride, propenoic acid, propenoic acid chloride, 2-butene diacid chloride, maleic anhydride, N-(4-hydroxyphenyl)-maleimide, maleic acid diamide, propenoic acid amide, 2-butene diacid, and 2-butene diacid amide.

## Revendications

1. Procédé pour la fonctionnalisation des parois latérales de nanotubes de carbone, en particulier de nanotubes de carbone à parois multiples, **caractérisé en ce que** la paroi latérale des nanotubes de carbone est fonctionnalisée avec l'aide de microondes au moyen d'une réaction de Diels-Alder.

2. Procédé selon la revendication 1, **caractérisé en ce que** les nanotubes de carbone sont placés sous irradiation par microondes pour la fonctionnalisation.

3. Procédé selon la revendication 1 ou 2, **caractérisé en ce que** les nanotubes de carbone sont placés dans un mélange réactionnel et que le mélange réactionnel pour la fonctionnalisation est placé au moins temporairement sous irradiation par microondes.

4. Procédé selon l'une des revendications 1 à 3, **caractérisé en ce que** les nanotubes de carbone ou le mélange réactionnel sont soumis à la réaction sous irradiation par microondes pendant une durée prédéterminée, de préférence pendant 1 à 20 minutes.

5. Procédé selon l'une des revendications 1 à 4, **caractérisé en ce que** les nanotubes de carbone ou le mélange réactionnel sont soumis à la réaction dans un intervalle de température défini, en particulier un intervalle de température de 50 à 300°C.

6. Procédé selon l'une des revendications 1 à 5, **caractérisé en ce que** le procédé est mis en oeuvre avec du gaz protecteur.

7. Nanotube de carbone fonctionnalisé, en particulier nanotube de carbone à parois multiples fonctionnalisé, **caractérisé en ce que** celui-ci est élaboré, a été élaboré ou peut être élaboré avec un procédé selon l'une des revendications 1 à 6, tandis que la paroi latérale du nanotube de carbone est fonctionnalisée avec un partenaire de réaction choisi dans le groupe consistant en imide d'acide maléique, acide maléique, dichlorure d'acide maléique, acide propénoïque, chlorure d'acide propénoïque, chlorure d'acide 2-butènedioïque, anhydride d'acide maléique, imide d'acide N-(4-hydroxyphényl)-maléique, diamide d'acide maléique, amide d'acide propénoïque, acide 2-butènedioïque, et amide d'acide 2-butènedioïque.
